# EUROPÄISCHE PATENTSCHRIFT

(11) **EP 4 333 765 B1**
(45) Veröffentlichungstag und Bekanntmachung des Hinweises auf die Patenterteilung: **23.09.2026**
(21) Anmeldenummer: 22718043.7
(22) Anmeldetag: 14.04.2022
(51) Int. Cl.: A61C 7/00, A61C 13/00, A61C 7/08, B23K 26/02, B23Q 15/20, B23K 26/03, B23K 26/16, B23K 26/361, A61C 19/00

(54) **VORRICHTUNG ZUM TRIMMEN EINER ZAHNSCHIENE**
DEVICE FOR TRIMMING A DENTAL SPLINT
DISPOSITIF DE DÉTOURAGE D'UNE GOUTTIÈRE DENTAIRE

(30) Priorität: 04.05.2021 AT 503422021
(43) Veröffentlichungstag der Anmeldung: 13.03.2024
(73) Patentinhaber: Dental Manufacturing Unit GmbH, 5412 Puch bei Hallein (AT)
(72) Erfinder: HUBER, Martin, 5452 Pfarrwerfen (AT); WÖRMER-AIGMÜLLER, Alfons, 5500 Bischofshofen (AT)
(74) Vertreter: Hübscher & Partner Patentanwälte GmbH
(86) Internationale Anmeldenummer: PCT/AT2022/060118
(87) Internationale Veröffentlichungsnummer: WO 2022/232853

(56) Entgegenhaltungen:
- US-A1- 2018 116 762
- US-A1- 2019 102 880
- US-B1- 10 624 722

## Beschreibung

### Technisches Gebiet

Die Erfindung bezieht sich auf eine Vorrichtung zum Trimmen einer mittels Tiefziehverfahren hergestellten und tiefziehformfreien Zahnschiene mit einer im Raum verlagerbaren Halterung für die Zahnschiene, einer Absaugvorrichtung, einem Laser und einer Recheneinheit.

### Stand der Technik

Aus dem Stand der Technik sind Zahnschienen bekannt, die mittels Tiefziehverfahren aus Tiefziehfolien hergestellt werden. Nachdem dabei die Tiefziehfolie über ein Modell eines Gebisses gezogen wird, muss die Zahnschiene getrimmt werden. Dabei wird der freie Tiefziehrand, also der Teil der Tiefziehfolie, der nicht vom Modell geformt wurde und keinen Teil der Zahnschiene bildet, von der Zahnschiene getrennt und die entstehende Schnittlinie entgratet.

Die US10624722B1 offenbart ein Verfahren und eine Vorrichtung zum Trimmen einer mittels Tiefziehverfahren hergestellten Zahnschiene. Dabei wird die Zahnschiene an die Halterung der Vorrichtung über das Zahnmodell befestigt.

Die EP2101674B1 zeigt eine Vorrichtung, bei der die Zahnschiene auf drei Säulen gelagert ist, die sich auf einer im Raum bewegbaren Plattform befinden. Dabei wird die Zahnschiene mittels Unterdruck auf den Säulen fixiert, woraufhin sie anschließend mit einem Laser getrimmt werden kann. Dazu errechnet eine Recheneinheit die erforderliche Schnittlinie des Lasers anhand eines CAD-Modells der Zahnschiene und steuert die Plattform und den bewegbaren Laser so an, dass diese Schnittlinie vom Laser nachgefahren wird.

Nachteilig am Stand der Technik ist allerdings, dass zum Trimmen einer Zahnschiene immer das entsprechende CAD-Modell erstellt und in die Recheneinheit geladen werden muss. Darüber hinaus müssen sowohl die Parameter des Lasers, wie beispielsweise Intensität oder räumliche Ausrichtung des Strahls, als auch Position der Zahnschiene genau bekannt und präzise aufeinander abgestimmt werden. Zusätzlich ergibt sich das Problem, dass durch den Schneidvorgang bereits geschnittene Teile des Tiefziehrandes plötzlich herabhängen und ein Verrutschen der Zahnschiene bewirken können. Dies resultiert in Schnittfehlern, da die tatsächliche Position der Zahnschiene von der mit dem CAD-Modell bestimmten Soll-Position abweicht.

Zwar wurde bereits vorgeschlagen (EP2760624B1), die Zahnschiene auf einer Plattform zu lagern, sodass diese großflächig mit dem freien Tiefziehrand aufliegt und vom Modell des Gebisses gestützt wird, allerdings erfordert dies eine noch kompliziertere dynamische Regelung der Laserstärke, da die Intensität laufend auf die lokale Dicke der Tiefziehfolie abgestimmt werden muss, damit das Modell des Gebisses nicht durch falsch eingestellte Laserintensität mit der Tiefziehfolie verschweißt, oder die Vorrichtung durch den Laser beschädigt wird.

### Darstellung der Erfindung

Der Erfindung liegt somit die Aufgabe zugrunde, eine Vorrichtung aufzuzeigen, die trotz der Verwendung von üblichen Bauteilen ein präzises Trimmen von Zahnschienen mit einem Minimum an Regelungsaufwand und Vorbereitung für den Benutzer ermöglicht.

Die Erfindung löst die gestellte Aufgabe dadurch, dass der Laser stationär ist, eine Kamera zum Bestimmen der Position der Zahnschiene vorgesehen ist, die Halterung eine Plattform und einen Anschlag zur kraftschlüssigen und spielfreien Lagerung der tiefziehformfreien Zahnschiene umfasst, und dass die Plattform zumindest abschnittsweise derart thermostabil ist, dass diese überschüssige Energie eines Laserstrahls des Lasers beschädigungsfrei aufnehmen und vorzugsweise ableiten kann. Die vom Modell des Gebisses getrennte Zahnschiene wird vor dem Trimmen auf der Plattform gelagert, sodass der freie Tiefziehrand im Wesentlichen plan auf der Plattform aufliegt. Der Anschlag fixiert die Zahnschiene über ihren freien Tiefziehrand kraftschlüssig und spielfrei, sodass eine Relativbewegung der Zahnschiene zur Plattform trotz Verlagerung der Halterung verhindert wird. Die Kamera erfasst die Lage und Form der auf der Plattform gelagerten Zahnschiene und den Grenzbereich zwischen Zahnschiene und dem freien Tiefziehrand im Raum. Aus diesen räumlichen Daten bestimmt die Recheneinheit die Schnittlinie zum Trennen der Zahnschiene vom freien Tiefziehrand und folgend wie die Halterung verlagert werden muss, damit der Laserstrahl der Schnittlinie folgt. Dabei kann die Bestimmung der Schnittlinie auch während des Trimmens jederzeit ein weiteres Mal mit einer Neuerfassung der Positionsdaten durch die Kamera wiederholt und eine angepasste Schnittlinie bestimmt werden. Zusätzlich entfällt durch die Verwendung der Kamera die im Stand der Technik notwendige Positionsmarkierung auf der Zahnschiene. Da der Laser stationär ist, muss lediglich die Halterung verlagert werden, damit der Laser der Schnittlinie folgen kann. Dadurch entstehen weniger Positionsungenauigkeiten und die Regelung vereinfacht sich. Die Laserintensität kann beim Trimmen ungeregelt bleiben, da die überschüssige Energie des Lasers von der thermostabilen Plattform absorbiert wird. Laserintensität und Material der Plattform können werksmäßig so aufeinander abgestimmt sein, dass die Laserintensität ausreicht, um übliche Zahnschiene zu trimmen, aber zu gering ist um die Plattform zu beschädigen. Da die erforderlichen Schnittlinien der Zahnschienen im Wesentlichen immer nur über demselben Teilbereich der Plattform verlaufen, muss die Plattform nur in diesem Teilbereich thermostabil ausgeführt sein. Die Zahnschiene wird ohne dem Modell des Gebisses getrimmt, wodurch die Laserstärke auch nicht zur Schonung des Modells angepasst werden muss. Überaschenderweise hat sich dabei herausgestellt, dass selbst bei vollständigem Trennen eines freien Tiefziehrandes von der Zahnschiene die Zahnschiene weiterhin stabil durch einen Reibschluss zum abgetrennten freien Tiefziehrand gelagert ist. In einer bevorzugten Ausführungsform ist die Plattform nicht nur thermostabil, sondern auch wärmeleitend, sodass die überschüssige Laserenergie von der Zahnschiene weggeleitet werden kann und sich kein Wärmestau in der Plattform aufbaut, der die Zahnschiene erhitzt. Dazu kann die Plattform beispielweise aus eloxiertem Aluminium ausgeführt sein. Zur Bestimmung der Position der Zahnschiene und der erforderlichen Schnittlinie aus den Daten der Kamera kann die Recheneinheit mit selbstlernenden Algorithmen bzw. einem neuronalen Netz ausgestattet sein, die insbesondere darauf trainiert sein kann, nur die räumliche Lage der Zahnschiene, des freien Tiefziehrandes und des Grenzbereiches dazwischen zu erfassen und sonstige detailreiche Bildinformationen nicht zu verarbeiten. Zur Bestimmung der Position kann die Halterung mit der Zahnschiene in eine Erfassungsposition verlagert werden, in der die Kamera ein Bild von der Zahnschiene aufnimmt. Diese Erfassungsposition ist im Hinblick auf die relative Position der Halterung zur Kamera dergestalt gewählt, dass die verwendete Kamera möglichst ohne Autofocus oder weitere technische Hilfsmittel ein qualitativ hochwertiges Bild der Zahnschiene und des umgebenden Tiefziehrandes aufnehmen kann, sodass dieses Bild von der Recheneinheit einfach bearbeitet werden kann. So kann die Zahnschiene beispielsweise in Erfassungsposition im Wesentlichen quer zur optischen Achse der Kamera ausgerichtet sein. Die Bearbeitungsschritte des Bildes durch die Recheneinheit können ein Zuschneiden, Normalisieren und Segmentieren umfassen, sodass die Recheneinheit aus dem bearbeiteten Bild den Verlauf der erforderlichen Schnittlinien bestimmen kann. Nachdem das Bild in Erfassungsposition normalisiert worden ist, kann der umgebende Tiefziehrand über seinen Pixelwert von der Recheneinheit erkannt, von der Zahnschiene unterschieden und so die erforderliche Schnittlinie ermittelt werden. Optional kann die Recheneinheit das erfasste und bearbeitete Bild mit einem Computermodell der Zahnschiene abgleichen. Auch können in Erfassungsposition Bezugspunkte bestimmt werden, anhand derer die Relativposition der Zahnschiene auch nach einer Verlagerung der Halterung noch erkannt werden kann.

Der Rechenaufwand zur Bestimmung der erforderlichen Schnittlinie kann reduziert und die Ansteuerung der Halterung vereinfacht werden, wenn die Kamera im Bereich des Lasers angeordnet ist. Je näher dabei die Kamera beim Laser angeordnet ist, desto ähnlicher sind der optische Pfad des Lasers und der Kamera, sodass die Recheneinheit keine komplexen Transformationsschritte ausführen muss, um die Daten der Kamera in Befehle zur Verlagerung der Halterung umzuwandeln. Verwendet die Recheneinheit ein neuronales Netz, erleichtert dies auch das Training desselben, da auch für die Trainingsbilder keine komplexen Transformationsschritte notwendig sind, wodurch sich die Trainingszeit verkürzt. In einer bevorzugten Ausführungsform ist die Kamera eine RGB-Kamera, da die Bildqualität einer solchen Kamera trotz geringer Kosten hoch genug ist, um zuverlässige Bilddaten zur weiteren Bearbeitung für die Recheneinheit zu erzeugen.

Die Zahnschiene kann ohne weitere Maßnahmen noch stärker auf der Plattform fixiert werden, wenn die Plattform wenigstens einen Durchbruch aufweist, der mit einem an der dem Laser abgewandten Seite der Plattform angesetzten Einlass der Absaugvorrichtung fluidverbunden ist. Zufolge dieser Maßnahmen saugt die Absaugvorrichtung nicht nur Partikel und/oder Dämpfe die beim Trimmen entstehen ab, sondern appliziert über den wenigstens einen Durchbruch auch einen Unterdruck auf die Zahnschiene, der die Haftung der Zahnschiene auf der Plattform begünstigt. Da die erforderlichen Schnittlinien der Zahnschienen im Wesentlichen immer nur über demselben Teilbereich der Plattform verlaufen, sind in einer bevorzugten Ausführungsform mehrere Durchbrüche in diesem Teilbereich angeordnet, wodurch Partikel und/oder Dämpfe dort abgesaugt werden, wo sie entstehen und die Zahnschiene an ihren geschnittenen Rändern vom Unterdruck zusätzlich fixiert wird. Da der Laserstrahl ebenfalls die Durchbrüche der Plattform passieren und auf den darunterliegenden Teil der Halterung treffen kann, müssen thermisch instabile Teile der Halterung außerhalb des Strahlenganges angeordnet und/oder die für den Laserstrahl erreichbaren Teile ebenso thermostabil ausgeführt sein. Zwar kann die Plattform aufgrund ihrer Verlagerbarkeit eine Vielzahl an Relativpositionen zum Laser einnehmen, jedoch ist im Sinne der Erfindung die Seite der Plattform gemeint, die dem Laser beim Bearbeiten der Zahnschiene abgewandt ist. Um neben hoher örtlicher Präzision beim Trimmen auch das Entgraten der Zahnschiene zu vereinfachen, wird vorgeschlagen, dass die Plattform zumindest abschnittsweise in fünf Raumrichtungen verlagerbar ist. So kann die Halterung und damit die Zahnschiene, neben drei translatorischen Bewegungen auch Rotationen um zwei Achsen ausführen, wodurch der Schnittwinkel des Lasers variiert werden kann.

Dadurch können die Schnittkanten der Zahnschiene nachbearbeitet bzw. abgetragen und so die Zahnschiene besser entgratet werden.

Beim Tiefziehen kann sich ein freier Tiefziehrand der Zahnschiene verformen, was das Fixieren der Zahnschiene auf der Plattform erschweren kann. Dies kann dazu führen, dass sich die Zahnschiene nicht in jeder Ausrichtung kraftschlüssig auf der Plattform lagern lässt, da sie bei Herstellung des Kraftschlusses die Verformung vom freien Tiefziehrand auf die Zahnschiene überträgt, wodurch möglicherweise eine falsche Schnittlinie erstellt wird. Um trotz solcher Verformungen eine genaue Bestimmung der Schnittlinie zur ermöglichen, kann der Anschlag ringförmig sein und mit der Plattform eine Aufnahme für den freien Tiefziehrand der Zahnschiene bilden. Der Kraftschluss wird zufolge dieser Maßnahmen entlang des ganzen freien Tiefziehrandes hergestellt und optional durch einen Formschluss ergänzt. Die Zahnschiene kann also über ihre freie Tiefziehfolie unabhängig von der Ausrichtung der Zahnschiene auf der Plattform gelagert werden, solange die freie Tiefziehfolie plan auf der Plattform aufliegt. Dadurch lassen sich häufig auftretende wellige Verformungen am freien Tiefziehrand plattdrücken. In einer bevorzugten Ausführungsform ist der Anschlag mit der Halterung über ein Scharnier verbunden und kann vor dem Trimmen heruntergeklappt und eingerastet werden.

Die Halterung kann einfach und präzise verlagert werden, wenn die Halterung einen Kreuzschlitten umfasst. Der Kreuzschlitten kann aufgrund seines einfachen Wirkprinzips über die Einstellspindeln einfach angesteuert werden und benötigt keine Kalibrierung. Darüber hinaus kann die Halterung über eine oder mehrere der Führungen des Kreuzschlittens ebenso rotiert werden.

Um kompakte Konstruktionsverhältnisse zu schaffen, kann die Halterung einen Drehteller umfassen, dem die zumindest abschnittsweise thermostabile Plattform zugeordnet ist. Dadurch kann die Zahnschiene mit der Plattform einfach und platzsparend verlagert werden ohne die Zugänglichkeit für den Laser einzuschränken. Besonders bevorzugte Konstruktionsverhältnisse ergeben sich, wenn der Drehteller an einem Kreuzschlitten angeordnet wird.

### Kurze Beschreibung der Erfindung

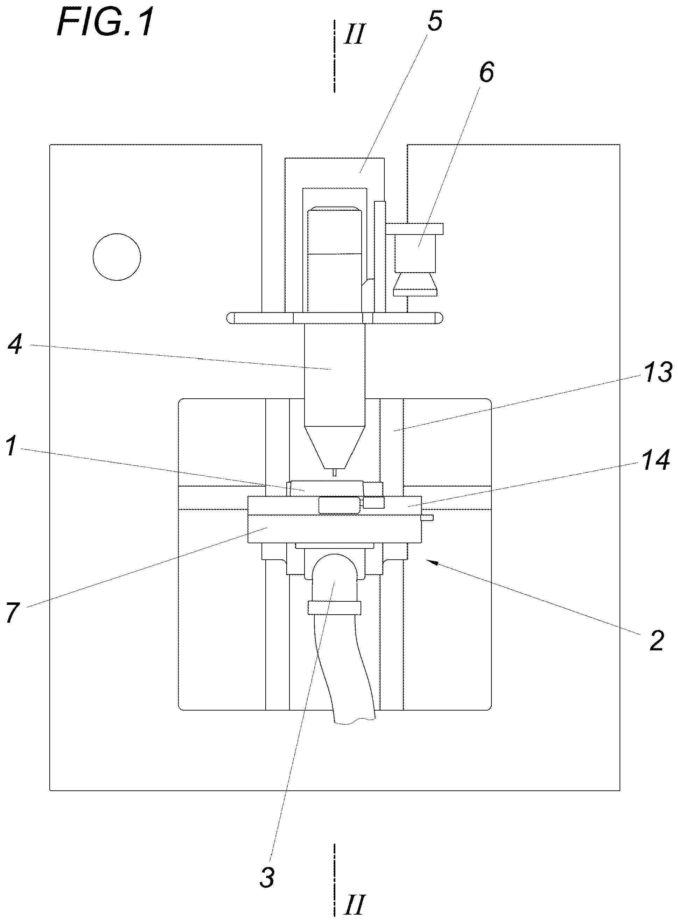

In der Zeichnung ist der Erfindungsgegenstand beispielsweise dargestellt. Es zeigen
- Fig. 1: eine Vorderansicht einer erfindungsgemäßen Vorrichtung,
- Fig. 2: einen Schnitt entlang der Linie II - II der Fig. 1,
- Fig. 3: eine Draufsicht auf eine Halterung einer erfindungsgemäßen Vorrichtung in einem größeren Maßstab und

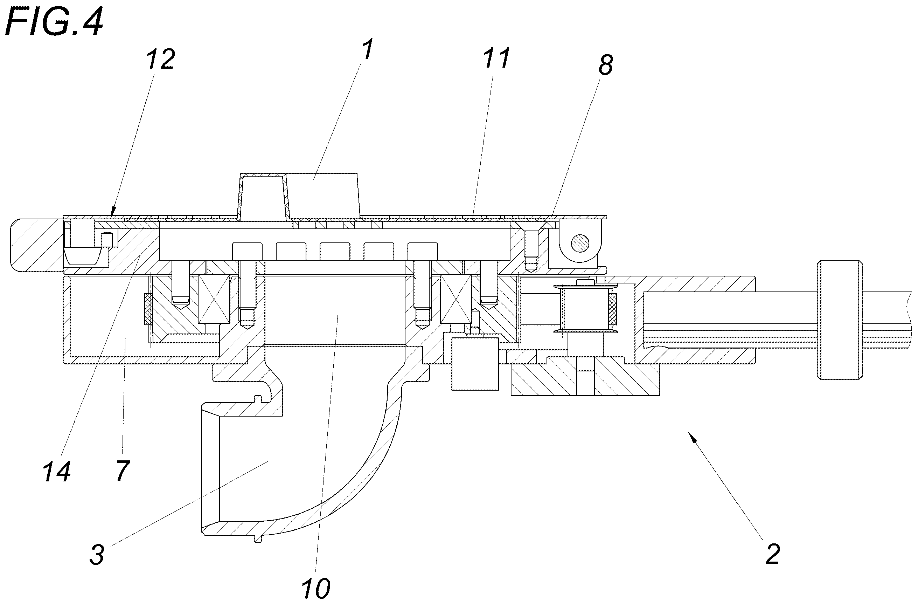

- Fig. 4: einen Schnitt entlang der Linie IV - IV der Fig. 3

### Wege zur Ausführung der Erfindung

Eine erfindungsgemäße Vorrichtung zum Trimmen einer Zahnschiene 1 (nur schematisch dargestellt) umfasst eine verlagerbare Halterung 2 für die Zahnschiene 1 und eine an die Halterung 2 angesetzte Absaugvorrichtung 3 zum Absaugen von durch den Trimmvorgang erzeugten Partikeln und Dämpfen. Ferner umfasst die Vorrichtung einen Laser 4, eine Recheneinheit 5, die in der gezeigten Ausführungsform im Gehäuse des Lasers 4 montiert ist, und eine Kamera 6. Die Halterung 2 umfasst eine wenigstens abschnittsweise thermostabile Plattform 7 auf der die Zahnschiene 1 gelagert werden kann. Da die Zahnschiene 1 zum Trimmen ohne ihr zugehöriges Tiefziehmodell auf der Plattform 7 gelagert wird, muss die thermostabile Plattform 7 die überschüssige Energie des Laserstrahls des Lasers 4 beschädigungsfrei aufnehmen und bevorzugter Weise ableiten können. Der Laser 4 ist stationär ausgeführt, weswegen die Plattform 2 in mehreren Raumrichtungen, in einer bevorzugten Ausführungsform in fünf Raumrichtungen, verlagerbar ausgeführt sein muss, um den Trimmvorgang für den Laser 4 zu ermöglichen Um in jeder Lage eine zuverlässige Lagerung der Zahnschiene 1 auf der Plattform 7 der Halterung 2 zu gewährleisten, verfügt die Halterung 2 deswegen über einen Anschlag 8 für die Zahnschiene 1, mit der diese kraftschlüssig gelagert werden kann. Um in jeder Lage eine präzise Bearbeitung durch den Laser 4 zu ermöglichen, muss die Lagerung der Zahnschiene 1 spielfrei ausgeführt sein.

Die Kamera 6 liefert die erforderlichen Bilddaten anhand derer die Recheneinheit 5 die erforderliche Schnittlinie zum Trimmen der Zahnschiene 1 bestimmt und die Halterung 2 so verlagert, dass der Laserstrahl dieser erforderlichen Schnittlinie folgen kann. Die Kamera 6 ist dabei im Bereich des Lasers 4 angeordnet, damit befinden sich auch die optischen Achsen der Kamera 6 bzw. des Lasers 4 im selben Bereich, wodurch die zum Trimmen erforderlichen Lageänderungen der Halterung 2 leichter durch die Recheneinheit 5 ermittelt werden können.

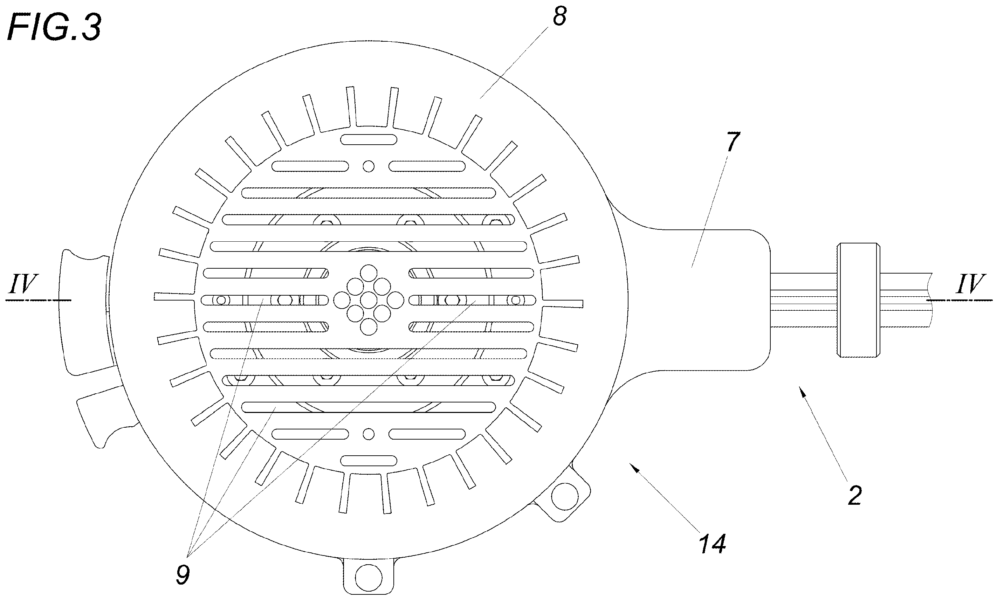

Wie insbesondere der Fig. 3 entnommen werden kann, kann die Plattform 7 einen oder mehrere Durchbrüche 9 umfassen, und die Absaugvorrichtung 3 an der der Zahnschiene 1 abgewandten Seite der Plattform 7 über einen Einlass 10 an die Halterung 2 angeschlossen sein. Dadurch kann eine Fluidverbindung zwischen dem Einlass 10 und dem wenigstens einen Durchbruch 9 hergestellt werden, die es ermöglicht, die beim Trimmvorgang durch den Laser 4 unmittelbar um die Zahnschiene 1 entstehenden abzusaugenden Dämpfe von der der Zahnschiene 1 abgewandten Seite der Plattform 7 abzusaugen. Dies erhöht die Bewegungsfreiheit der Halterung 2 und ermöglicht einen kürzeren Abstand zwischen Einlass 10 und der Zahnschiene 1. Dies erleichtert darüber hinaus die Erzeugung eines Unterdrucks durch die Absaugvorrichtung 3, die die Lagerung der Zahnschiene 1 auf der Plattform 7 weiter begünstigt.

Wenn der Anschlag 8 der Plattform 7 ringförmig ausgeführt ist, kann die Zahnschiene 1 umfangseitig über ihren freien Tiefziehrand 11 auf der Plattform 7 gelagert werden, wodurch die spielfreie, kraftschlüssige Lagerung der Zahnschiene 1 unabhängig von einer Lageänderung der Halterung 2 umgesetzt werden kann. Dabei bildet die Plattform 7 mit dem Anschlag 8 eine Aufnahme 12 für den freien Tiefziehrand 11 der Zahnschiene 1.

Umfasst die Halterung 2 einen Kreuzschlitten 13 und einen Drehteller 14, dem die die zumindest abschnittsweise thermostabile Plattform 7 zugeordnet ist, kann die Halterung 2 einfach ansteuerbar, platzsparend und kostengünstig verlagert werden.

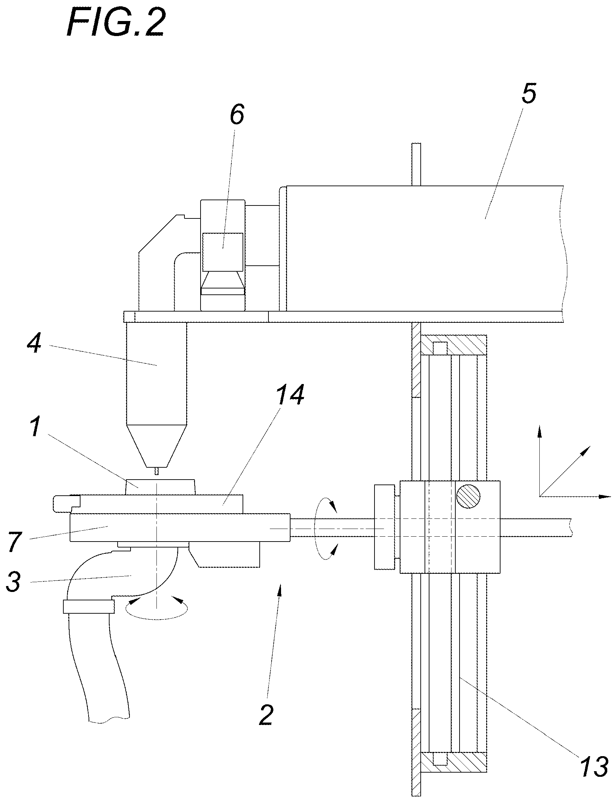

Die fünf Freiheitsgrade der Bewegung sind in dem eingezeichneten Koordinatensystem der Fig. 2 dargestellt. Neben drei translatorischen Freiheitsgraden kann die Plattform 7 zumindest abschnittsweise rotiert werden. Dies lässt sich beispielsweise über den Drehteller 14 umsetzen. Ein weiterer Rotationsfreiheitsgrad lässt sich beispielsweise dadurch umsetzen, dass ein Schlitten den Kreuzschlittens 13 als Achsträger fungiert, durch den die Längsachse der Plattform 7 geführt ist. Dadurch ist die Plattform 7 in Achsrichtung verschiebbar und um die Achse drehbar gelagert.

## Patentansprüche

1. Vorrichtung zum Trimmen einer mittels Tiefziehverfahren hergestellten und tiefziehformfreien Zahnschiene (1) mit einer im Raum verlagerbaren Halterung (2) für die Zahnschiene (1), einer Absaugvorrichtung (3), einem Laser (4) und einer Recheneinheit (5), wobei der Laser (4) stationär ist, eine Kamera (6) zum Bestimmen der Position der Zahnschiene (1) vorgesehen ist, die Halterung (2) eine Plattform (7) und einen Anschlag (8) zur kraftschlüssigen und spielfreien Lagerung der tiefziehformfreien Zahnschiene (1) umfasst, und die Plattform (7) zumindest abschnittsweise derart thermostabil ist, dass diese überschüssige Energie eines Laserstrahls des Lasers (4) beschädigungsfrei aufnehmen und vorzugsweise ableiten kann.

2. Vorrichtung nach Anspruch 1, **dadurch gekennzeichnet, dass** die Kamera (6) so im Bereich des Lasers (4) angeordnet ist, dass die Zahnschiene (1) in einer Erfassungsposition quer zur optischen Achse der Kamera (6) ausgerichtet ist.

3. Vorrichtung nach Anspruch 1 oder 2, **dadurch gekennzeichnet, dass** die Plattform (7) wenigstens einen Durchbruch (9) aufweist, der mit einem an der dem Laser (4) abgewandten Seite der Plattform (7) angesetzten Einlass (10) der Absaugvorrichtung (3) fluidverbunden ist.

4. Vorrichtung nach einem der Ansprüche 1 bis 3, **dadurch gekennzeichnet, dass** die Plattform (7) zumindest abschnittsweise in fünf Raumrichtungen verlagerbar ist.

5. Vorrichtung nach einem der Ansprüche 1 bis 4, **dadurch gekennzeichnet, dass** der Anschlag (8) ringförmig ist und mit der Plattform (7) eine Aufnahme (12) für einen freien Tiefziehrand (11) der Zahnschiene (1) bildet.

6. Vorrichtung nach einem der Ansprüche 1 bis 5, **dadurch gekennzeichnet, dass** die Halterung (2) einen Kreuzschlitten (13) umfasst.

7. Vorrichtung nach einem der Ansprüche 1 bis 6, **dadurch gekennzeichnet, dass** die Halterung (2) einen Drehteller (14) umfasst, dem die zumindest abschnittsweise thermostabile Plattform (7) zugeordnet ist.

## Claims

1. A device for trimming a dental splint (1) manufactured by means of a deep-drawing process and free from a deep-drawing mold, comprising a spatially movable holder (2) for the dental splint (1), a suction device (3), a laser (4), and a computation unit (5), wherein the laser (4) is stationary, a camera (6) for determining the position of the dental splint (1) is provided, the holder (2) comprises a platform (7) and a stop (8) for force-locked and play-free mounting of the dental splint (1) free from a deep-drawing mold, and the platform (7) is thermostable at least in sections such that it can absorb without damage, and preferably dissipate, excess energy of a laser beam of the laser (4).

2. A device according to claim 1, **characterized in that** the camera (6) is arranged in the region of the laser (4) such that, in a capture position, the dental splint (1) is oriented transverse to the optical axis of the camera (6).

3. A device according to claim 1 or 2, **characterized in that** the platform (7) compromises at least one aperture (9) which is fluid-connected to an inlet (10) of the suction device (3), said inlet (10) being located to the side of the platform (7) facing away from the laser (4).

4. A device according to any one of claims 1 to 3, **characterized in that** the platform (7) is displaceable, at least in sections, in five spatial directions.

5. A device according to any one of claims 1 to 4, **characterized in that** the stop (8) is annular and, together with the platform (7), forms a receptacle (12) for a free deep-drawing edge (11) of the dental splint (1).

6. A device according to any one of claims 1 to 5, **characterized in that** the holder (2) comprises a cross slide (13).

7. A device according to any one of claims 1 to 6, **characterized in that** the holder (2) comprises a turntable (14) with which the platform (7), which is thermostable at least in sections, is associated.

## Revendications

1. Dispositif destiné à ajuster une gouttière dentaire (1) fabriquée par emboutissage et ne présentant pas de moule d'emboutissage, comprenant un support (2) pouvant être déplacé dans l'espace pour la gouttière dentaire (1), un dispositif d'aspiration (3), un laser (4) et une unité de calcul (5), le laser (4) étant fixe, une caméra (6) étant prévue pour déterminer la position de la gouttière dentaire (1), le support (2) comprenant une plate-forme (7) et une butée (8) pour le logement par adhérence et sans jeu de la gouttière dentaire (1) sans moule d'emboutissage, et la plate-forme (7) est thermostable, au moins par sections, de telle sorte qu'elle puisse absorber sans subir de dommages l'énergie excédentaire d'un faisceau laser provenant du laser (4) et, de préférence, la dissiper.

2. Dispositif selon la revendication 1, **caractérisé en ce que** la caméra (6) est disposée dans la zone du laser (4) de telle sorte que la gouttière dentaire (1) soit orientée transversalement à l'axe optique de la caméra (6) dans une position de détection.

3. Dispositif selon la revendication 1 ou 2, **caractérisé en ce que** la plate-forme (7) comporte au moins une ouverture (9) qui est en communication fluidique avec une entrée (10) du dispositif d'aspiration (3), située sur le côté de la plate-forme (7) opposé au laser (4).

4. Dispositif selon l'une des revendications 1 à 3, **caractérisé en ce que** la plate-forme (7) est déplaçable, au moins par sections, dans cinq directions spatiales.

5. Dispositif selon l'une des revendications 1 à 4, **caractérisé en ce que** la butée (8) est de forme annulaire et forme, avec la plate-forme (7), un logement (12) destiné à recevoir un bord d'emboutissage libre (11) de la gouttière dentaire (1).

6. Dispositif selon l'une des revendications 1 à 5, **caractérisé en ce que** le support (2) comprend un chariot en croix (13).

7. Dispositif selon l'une des revendications 1 à 6, **caractérisé en ce que** le support (2) comprend un plateau tournant (14) auquel est associée la plate-forme (7) thermostable au moins par sections.
